(19) Europäisches Patentamt
European Patent Office
Office européen des brevets

(11) **EP 4 554 273 A1**

(12) **EUROPEAN PATENT APPLICATION**
published in accordance with Art. 153(4) EPC

(43) Date of publication:
**14.05.2025 Bulletin 2025/20**

(21) Application number: **23842139.0**

(22) Date of filing: **07.07.2023**

(51) International Patent Classification (IPC):
**H04W 24/02** $^{(2009.01)}$

(52) Cooperative Patent Classification (CPC):
**H04W 24/02**

(86) International application number:
**PCT/CN2023/106241**

(87) International publication number:
**WO 2024/017074 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.07.2022  CN 202210864312
30.08.2022  CN 202211044983**

(71) Applicant: **Huawei Technologies Co., Ltd.
Shenzhen, Guangdong 518129 (CN)**

(72) Inventors:
• **WANG, Sihai
Shenzhen, Guangdong 518129 (CN)**
• **QIN, Cheng
Shenzhen, Guangdong 518129 (CN)**
• **YANG, Rui
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND COMMUNICATION APPARATUS**

(57)  This application provides a communication method and a communication apparatus. The method includes: A first device obtains a first function used to evaluate a resource consumed by a second device for executing an artificial intelligence AI model, and determines, based on the first function and information about a first AI model, a first resource consumed by the second device for executing the first AI model. The first device determines, based on the first resource, whether to send the first AI model or a manner of obtaining the first AI model to the second device. The first device evaluates, by using the first function, the resource consumed by the second device for executing the AI model, and determines, based on the resource consumed by the second device for executing the first AI model, whether to send the first AI model to the second device. If the resource consumed by the second device for executing the first AI model does not meet a specific requirement, the first AI model is not sent to the second device, so that an appropriate AI model is sent to the second device, avoiding a waste of resources caused by sending an inappropriate AI model.

FIG. 2

## Description

This application claims priority to Chinese Patent Application No. 202210864312.1, filed with the China National Intellectual Property Administration on July 21, 2022 and entitled "AI MODEL USAGE SCENARIO INDICATION METHOD, TERMINAL DEVICE, AND NETWORK DEVICE", and to Chinese Patent Application No. 202211044983.X, filed with the China National Intellectual Property Administration on August 30, 2022 and entitled "COMMUNICATION METHOD AND COMMUNICATION APPARATUS", which are incorporated herein by reference in their entireties.

## TECHNICAL FIELD

This application relates to the communication field, and specifically, to a communication method and a communication apparatus.

## BACKGROUND

Introduction of an artificial intelligence (artificial intelligence, AI) technology into a wireless communication system has been a research focus in recent years. When the AI technology is applied to the wireless communication system, there is a scenario in which an AI model is transferred between communication devices, to be specific, a transmit end device transfers the AI model to a receive end device. Further, the receive end device needs to complete execution of the AI model under a limited condition. The limited condition may include: Execution of the AI model is completed within specific time and/or with specific energy. The execution of the AI model includes training and/or inference of the AI model. Therefore, how to transfer the AI model between the communication devices becomes an urgent problem to be resolved.

## SUMMARY

Embodiments of this application provide a communication method, to transfer an AI model between communication devices while avoiding a waste of resources.

According to a first aspect, a communication method is provided. The method may be performed by a first device, or may be performed by a component (for example, a chip or a circuit) of the first device. This is not limited in this application. For ease of description, the following uses an example in which the method is performed by the first device for description.

The communication method includes: The first device obtains a first function, where the first function is used to evaluate a resource consumed by a second device for executing an artificial intelligence AI model. The first device determines, based on the first function and information about a first AI model, a first resource consumed by the second device for executing the first AI model. The first device determines, based on the first resource, whether to send first information to the second device, where the first information includes at least one of the following: the first AI model or a manner of obtaining the first AI model.

Based on the foregoing technical solution, the first device may evaluate, based on the first function, the resource consumed by the second device for executing the AI model, and determine, based on the resource consumed by the second device for executing the first AI model, whether to send the first AI model to the second device. It may be understood that the first device does not send all AI models, but before sending an AI model, evaluates a resource consumed by the second device for executing the AI model. If the resource consumed by the second device for executing the first AI model does not meet a specific requirement, the first AI model may not be sent to the second device, so that an appropriate AI model is sent to the second device, avoiding a waste of resources caused by sending an inappropriate AI model.

With reference to the first aspect, in some implementations of the first aspect, the first function includes at least one of the following: a second AI model generated through training based on second information and third information; a mapping function formed through fitting based on second information and third information; or a mapping table obtained through statistics collection based on second information and third information, where an input of the first function is related to the second information, an output of the first function is related to the third information, and the second information includes at least one of the following information: information about an AI operator, information about an AI module, or information about a third AI model; and the third information includes at least one of the following information: a resource consumed by a third device for executing the AI operator, a resource consumed by a third device for executing the AI module, or a resource consumed by a third device for executing the third AI model, the third device is the second device or the third device has a same first capability as the second device, and the first capability is related to execution of the AI operator, the AI module, or the third AI model.

Based on the foregoing technical solution, the first function in this application may be specifically implemented in a plurality of forms. This improves flexibility of the solution.

With reference to the first aspect, in some implementations of the first aspect, the information about the AI module includes at least one of the following: type information of the AI module, a parameter of the AI module, information about front and rear modules of the AI module, or information about front and rear operators of the AI module; the information about the AI operator includes at least one of the following: type information of the AI operator, a parameter of the AI operator, information about front and rear operators of the AI operator, or information about front and rear modules of the AI operator; and the information about the third AI model includes at least one of the following: a parameter of an overall structure of the third AI model or a parameter of a substructure of the third AI model.

With reference to the first aspect, in some implementations of the first aspect, the information about the first AI model includes at least one of the following: information about an AI operator included in the first AI model, information about an AI module included in the first AI model, a parameter of an overall structure of the first AI model, or a parameter of a substructure of the first AI model.

With reference to the first aspect, in some implementations of the first aspect, that the first device obtains the first function includes: The first device receives the first function; or the first device receives first indication information, and obtains the first function based on the first indication information, where the first indication information includes information indicating a manner of obtaining the first function, and/or an identifier of the first function.

Based on the foregoing technical solution, that the first device obtains the first function may be that the first device directly receives the first function, or may be that the first device receives the first indication information and indirectly obtains the first function based on the first indication information. This provides different obtaining manners, and improves flexibility of the solution.

With reference to the first aspect, in some implementations of the first aspect, when the first resource meets a first condition, the first device sends the first information to the second device, where the first condition is related to a preset threshold.

Based on the foregoing technical solution, when determining that the first resource consumed by the second device for executing the first AI model meets the first condition, the first device sends the first AI model or the manner of obtaining the first AI model to the second device. In other words, it is ensured that the first condition can be met when the transmitted first AI model is executed in the second device.

With reference to the first aspect, in some implementations of the first aspect, the first resource includes at least one of the following: time or energy.

With reference to the first aspect, in some implementations of the first aspect, when the first resource includes the time and the energy, the preset threshold includes a first preset threshold and a second preset threshold, the first preset threshold is related to the time, and the second preset threshold is related to the energy.

With reference to the first aspect, in some implementations of the first aspect, before that the first device determines, based on the first resource, whether to send the first information to the second device, the method further includes: The first device receives at least one of the following information from the second device: processing resource indication information or second indication information, where the processing resource indication information indicates a proportion of processing resources that can be used by the second device to execute the first AI model, and the second indication information indicates to adjust a value of a proportion of the first resource consumed by the second device for executing the first AI model.

With reference to the first aspect, in some implementations of the first aspect, the processing resource is related to the first capability of the second device, and the first capability is related to execution of the AI operator, the AI module, or the third AI model.

With reference to the first aspect, in some implementations of the first aspect, that the first device determines, based on the first function and the information about the first AI model, the first resource consumed by the second device for executing the first AI model includes: The first device determines, based on the first function, the information about the first AI model, and at least one of the following information: the resource indication information or the second indication information, the first resource consumed by the second device for executing the first AI model.

Based on the foregoing technical solution, in a process of evaluating the first resource consumed by the second device for executing the first AI model, in addition to considering the first function, the first device may further consider the proportion of processing resources that can be used by the second device to execute the first AI model, and may further consider adjusting the value of the first resource consumed by the first AI model, so that another consideration factor is added, to improve evaluation accuracy.

With reference to the first aspect, in some implementations of the first aspect, the method further includes: The first device obtains a second function, where the second function is used to evaluate a resource consumed by a fourth device for executing an AI model. The first device determines, based on the second function and information about a fourth AI model, a second resource consumed by the fourth device for executing the fourth AI model. When the first device determines, based on the first resource, to send the first information to the second device, and determines, based on the second resource, to send fourth information to the fourth device, the first device determines, based on the second function and the first function, a first task executed by the second device and a second task executed by the fourth device, where the first task and the second task meet a first rule.

Alternatively, a communication method includes: A first device obtains a first function, where the first function is used to evaluate a resource consumed by a second device for executing an artificial intelligence AI model. The first device obtains a second function, where the second function is used to evaluate a resource consumed by a fourth device for executing an AI model. The first device determines, based on the second function and the first function, a first task executed by the second device and a second task executed by the fourth device, where the first task and the second task meet a first rule.

Based on the foregoing technical solution, the first device may obtain functions of different devices, and determine a task assignment status with reference to a plurality of functions corresponding to a plurality of devices. The first device may complete assignment of an AI execution task according to a specific constraint condition.

With reference to the first aspect, in some implementations of the first aspect, the first rule includes at least one of the following: Execution of the first task and execution of the second task are completed simultaneously; execution of the first task and execution of the second task are completed based on a predefined time sequence; a preset time difference exists between a moment at which execution of the first task is completed and a moment at which execution of the second task is completed; energy required for completing execution of the first task is equal to energy required for completing execution of the second task; a proportion of energy required for completing execution of the first task to energy required for completing execution of the second task meets a preset proportion requirement; or a preset energy difference exists between energy required for completing execution of the first task and energy required for completing execution of the second task.

According to a second aspect, a communication method is provided. The method may be performed by a second device, or may be performed by a component (for example, a chip or a circuit) of the second device. This is not limited in this application. For ease of description, the following uses an example in which the method is performed by the second device for description.

The communication method includes: A second device obtains a first function and/or first indication information, where the first indication information includes information indicating a manner of obtaining the first function, and/or an identifier of the first function, and the first function is used to evaluate a resource consumed by the second device for executing an artificial intelligence AI model. The second device sends the first function and/or the first indication information to a first device.

With reference to the second aspect, in some implementations of the second aspect, the first function includes at least one of the following: a second AI model generated through training based on second information and third information; a mapping function formed through fitting based on second information and third information; or a mapping table obtained through statistics collection based on second information and third information, where an input of the first function is related to the second information, an output of the first function is related to the third information, and the second information includes at least one of the following information: information about an AI operator, information about an AI module, or information about a third AI model; and the third information includes at least one of the following information: a resource consumed by a third device for executing the AI operator, a resource consumed by a third device for executing the AI module, or a resource consumed by a third device for executing the third AI model, the third device is the second device or the third device has a same first capability as the second device, and the first capability is related to execution of the AI operator, the AI module, or the third AI model.

With reference to the second aspect, in some implementations of the second aspect, the method further includes: The second device receives first information from the first device, where the first information includes at least one of the following: a first AI model or a manner of obtaining the first AI model.

With reference to the second aspect, in some implementations of the second aspect, the method further includes: The second device sends processing resource indication information or second indication information to the first device, where the processing resource indication information indicates a proportion of processing resources that can be used by the second device to execute the first AI model, and the second indication information indicates to adjust a value of a proportion of a first resource consumed by the second device for executing the first AI model.

With reference to the second aspect, in some implementations of the second aspect, the processing resource is related to the first capability of the second device, and the first capability is related to execution of the AI operator, the AI module, or the third AI model.

For technical effects of the method shown in the second aspect and the possible designs of the second aspect, refer to the technical effects in the first aspect and the possible designs of the first aspect.

According to a third aspect, a first device is provided. The first device is configured to perform any one of the first aspect and the implementations of the first aspect. Specifically, the first device includes a processor and a memory. The memory is configured to store a computer program. The processor is configured to invoke the computer program from the memory and run the computer program, to enable the first device to perform any one of the first aspect and the implementations of the first aspect.

According to a fourth aspect, a second device is provided. The second device is configured to perform any one of the second aspect and the implementations of the second aspect. Specifically, the second device includes a processor and a memory. The memory is configured to store a computer program. The processor is configured to invoke the computer program from the memory and run the computer program, to enable the second device to perform any one of the second aspect and the implementations of the second aspect.

According to a fifth aspect, a communication apparatus is provided. The communication apparatus is configured to perform the method provided in any one of the first aspect and the implementations of the first aspect, or the method provided in any one of the second aspect and the implementations of the second aspect. Specifically, the communication apparatus may include units and/or modules (for example, a processing unit and a transceiver unit) configured to perform the method provided in any one of the first aspect and the implementations of the first aspect, or the method provided in any one of the second aspect and the implementations of the second aspect.

In an implementation, the communication apparatus is a terminal device. When the communication apparatus is a terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

According to a sixth aspect, this application provides a processor, configured to perform the method provided in the first aspect or the second aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores a computer program. When the computer program is run on a communication apparatus, the communication apparatus is enabled to perform the method in any one of the implementations of the first aspect or the second aspect.

According to an eighth aspect, a computer program product including instructions is provided. When the computer program product runs on a computer, the computer is enabled to perform the method provided in any one of the implementations of the first aspect or the second aspect.

According to a ninth aspect, a chip is provided. The chip includes a processor and a communication interface. The processor reads instructions through the communication interface, to perform the method provided in any one of the implementations of the first aspect or the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect or the second aspect.

According to a tenth aspect, a communication system is provided. The communication system includes the first device in the third aspect and the second device in the fourth aspect.

**BRIEF DESCRIPTION OF DRAWINGS**

FIG. 1 shows a communication scenario to which an embodiment of this application is applicable;
FIG. 2 is a schematic flowchart of a communication method according to this application;
FIG. 3 is a diagram of a process of generating a first function according to an embodiment of this application;
FIG. 4 is a schematic flowchart of another communication method according to this application;
FIG. 5 is a block diagram of a communication apparatus 10 according to an embodiment of this application;
FIG. 6 is a diagram of another communication apparatus 20 according to an embodiment of this application; and
FIG. 7 is a diagram of a chip system 30 according to an embodiment of this application.

**DESCRIPTION OF EMBODIMENTS**

The following describes the technical solutions in embodiments of this application with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

For example, in embodiments of this application, the wearable device may also be referred to as a wearable intelligent device, and is a general term of wearable devices developed by intelligently designing daily wear by using a wearable technology, such as glasses, gloves, watches, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured device that may implement complete or partial functions without depending on a smartphone, for example, a smartwatch or smart glasses. In addition, the device may alternatively be a portable device that is dedicated to only one type of application function and needs to be used together with another device such as a smartphone, for example, various smart bands or smart jewelry for monitoring physical signs.

In addition, in embodiments of this application, the terminal device may alternatively be a terminal device in an IoT system. An IoT is an important part in future development of information technologies. A main technical feature of the IoT is to connect things to a network by using a communication technology, to implement an intelligent network for human-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the terminal device may further include a sensor. Main functions of the terminal device include collecting data (for some terminal devices), receiving control information and downlink data from a network device, sending an electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), a gNB in a 5G system, for example, an NR system, a transmission point (TRP or TP), one antenna panel or a group of antenna panels (including a plurality of antenna panels) of a base station in a 5G system, or a network node that constitutes a gNB or a transmission point, for example, a baseband unit (BBU) or a distributed unit (distributed unit, DU).

The network device and the terminal device may be deployed on land, including an indoor scenario or an outdoor scenario, and a handheld scenario or a vehicle-mounted scenario; or may be deployed on water; or may be deployed on an airplane, a balloon, and a satellite in the air. Scenarios in which the network device and the terminal device are located are not limited in embodiment of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux® operating system, a Unix® operating system, an Android® operating system, an iOS® operating system, or a Windows® operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium includes but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel and various other media that can store, include, and/or carry instructions and/or data.

Specifically, this application may be applied to a communication system including two devices, for example, a device #1 and a device #2. The device #2 has an AI model (for example, an AI model #1) to be sent to the device #1, and the device #1 has an execution environment for executing the AI model #1. The device #2 may be a base station or a core network device, or may be another device that has the AI model #1 and is prepared to send the AI model #1 to the device #1, or a device that is prepared to arrange an execution task of the AI model #1 for the device #1. The device #1 may be a terminal, or may be another device that is prepared to obtain the AI model #1 from the device #2 and execute or obtain the execution task of the AI model #1. That the device #2 sends the AI model #1 to the device #1 may be understood as that the device #2 sends information about the AI model #1 to the device #1, and the device #1 may determine the AI model #1 based on the information about the AI model #1.

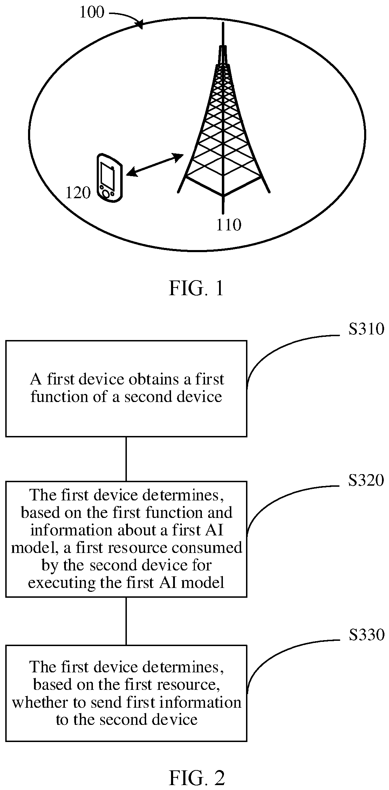

For ease of understanding of embodiments of this application, the following first uses the device #2 as a base station and the device #1 as a terminal device for description. A communication system to which embodiments of this application are applicable is described in detail by using a communication system shown in FIG. 1 as an example. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for each communication device such as the network device 110 and the terminal device 120. For each communication device in the communication system 100, the plurality of configured antennas may include at least one transmit antenna configured to send a signal and at least one receive antenna configured to receive a signal. Therefore, the communication devices in the communication system 100, for example, the network device 110 and the terminal device 120, may communicate with each other by using a multi-antenna technology.

It should be understood that FIG. 1 uses communication between the network device and the terminal device as an example to briefly describe a communication scenario to which this application can be applied, and this does not impose a limitation on another scenario to which this application can be applied.

It should be further understood that FIG. 1 is merely a simplified diagram of an example for ease of understanding. The communication system may further include another network device or may further include another terminal device, which is not shown in FIG. 1.

For ease of understanding of the technical solutions in embodiments of this application, some terms or concepts that are used in embodiments of this application are first briefly described.

1. Artificial intelligence (artificial intelligence, AI) is a theory, a method, a technology, and an application system in which human intelligence is simulated, expanded, and extended via a digital computer or a machine controlled by a digital computer, to perceive an environment, obtain knowledge, and achieve an optimal result by using the knowledge. In other words, artificial intelligence is a branch of computer science and is intended to understand essence of intelligence and produce a new intelligent machine that can react in a manner similar to human intelligence. Artificial intelligence is to study design principles and implementation methods of various intelligent machines, to enable the machines to have perception, inference, and decision-making functions. The intelligent machine may be used in various fields, for example, natural language processing, computer vision, decision-making and inference, human-machine interaction, and recommendation and search. AI further includes machine learning (machine learning, ML). In this application, AI is used to represent AI/ML.

Usually, the design principle and the implementation method of the foregoing intelligent machine depend on an AI model. The following describes the AI model.

2. AI model: An AI model may be considered as a core of an intelligent machine. Based on different types of AI models, the intelligent machine may be used in various fields, for example, natural language processing, computer vision, decision-making and inference, human-machine interaction, and recommendation and search. Currently, popular AI models include a convolutional neural network (convolutional neural network, CNN), a recurrent neural network (Recurrent Neural Network, RNN), a deep learning model (for example, Transformer) based on a self-attention mechanism, and the like.

3. AI model parameters usually include a structure parameter and a weight parameter (referred to as a weight for short). The structure parameter is a part of an AI model hyperparameter (hyperparameter), and is used to describe a structure of an AI model, for example, a quantity of CNN layers, an operator type of each layer, and a size and a quantity of convolution kernels. The weight is data used when input data is processed in the AI model, for example, each element in a convolution kernel, and a weight coefficient and an offset in a fully connected operator.

4. An execution environment refers to a condition for a device to execute an AI model, including hardware and software. Different designs of the hardware (having a capability such as memory reading and computing power) may have different AI model execution capabilities. The software may include AI model optimization, compilation, and an execution environment, and may also affect AI model execution performance. It may be considered that different execution environments indicate different AI model execution capabilities and different execution performance.

5. AI model execution: In this application, AI model execution includes but is not limited to training and/or inference. AI model training is a process of training an AI model in a data-driven manner by learning an input/output relationship and obtaining a trained AI model for inference, or a process of learning and obtaining, by using a data sample (known input data and output data), a weight value that can be trained in an AI model. AI model inference is a process of generating a group of outputs based on a group of inputs by using a trained AI model, or a process of processing input data by using a trained AI model to implement a specific function, for example, fingerprint unlocking, image recognition, semantic recognition, channel state information (channel state information, CSI) encoding and decoding in 5G communication, or terminal positioning.

6. Execution performance indicates performance of executing an AI model or a resource consumed for executing an AI model, and the resource includes at least one of the following: time or energy. For example, the execution performance may be duration and/or energy consumption of executing the AI model. In the following descriptions, execution performance of executing an AI model by a device is equivalent to a resource consumed for executing an AI model by a device.

In addition, for ease of understanding of embodiments of this application, the following several descriptions are provided.

First, in this application, the term "indicate" may include a direct indication and an indirect indication. When a piece of indication information is described as indicating A, the indication information may directly indicate A or indirectly indicate A, but it does not indicate that the indication information definitely carries A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information and sent separately. In addition, sending periodicities and/or sending occasions of these pieces of sub-information may be the same or may be different. A specific sending method is not limited in this application.

Second, "at least one" described in this application means one or more, and "a plurality of" means two or more. In addition, "first", "second", and various numerical numbers (for example, "#1" and "#2") in embodiments of this application are merely used for differentiation for ease of description, but are not intended to limit the scope of embodiments of this application. Sequence numbers of the following processes do not mean execution sequences. The execution sequences of the processes should be determined based on functions and internal logic of the processes, and should not be construed as any limitation on implementation processes in embodiments of this application. It should be understood that objects described in this way may be interchangeable in appropriate circumstances, so that solutions other than those in embodiments of this application can be described. In addition, in embodiments of this application, words such as "310" and "320" are merely identifiers for ease of description, and do not limit a sequence of performing steps.

Third, in this application, the terms such as "example" or "for example" are used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "storage" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the term "and/or" in this specification describes only an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes a scenario to which a communication method provided in embodiments of this application can be applied, and describes basic concepts that may be used in embodiments of this application.

Specifically, when an AI technology is applied to a wireless communication system, there may be a scenario in which an AI model needs to be transferred between communication devices, to be specific, a transmit end device transfers an AI model to a receive end device. In addition, when the receive end device executes the AI model, it is usually required that the receive end device complete execution of the AI model under a limited condition.

For example, the AI model may be transferred between the communication devices in the following manner, and the receive end device can complete execution of the AI model under the limited condition.

In a possible implementation, the transmit end device transfers the AI model to the receive end device. After receiving and executing the AI model, the receive end device may determine whether execution of the AI model can be completed under the limited condition. If execution of the AI model cannot be completed under the limited condition, it indicates that the current transfer fails, causing a waste of transmission resources, and causing an additional calculation amount and power consumption to the receive end device.

For example, the transmit end device transfers an AI model #1 to the receive end device. After receiving the AI model #1, the receive end device executes the AI model #1, and after the execution, determines that execution of the AI model #1 cannot be completed within first duration. This indicates that transferring the AI model #1 by the transmit end device to the receive end device is meaningless, causing a waste of transmission resources.

In another possible implementation, for whether the receive end device can complete execution of the AI model within limited time, a matching status is evaluated based on a computing capability $C_{UE}$ (for example, in a unit of floating-point operations per second (floating-point operations per second, FLOPS)) of the receive end device and computing complexity $C_M$ (for example, in a unit of floating-point operation (floating-point operation, FLOP)) of the AI model. If the following formula is satisfied, it indicates that the receive end device can complete execution of the AI model within the limited time:

$$\frac{c_M}{c_{UE}} + t_{th} \le t_i,$$

where

$t_{th}$ represents a margin, and may be configured in advance; and $t_i$ represents the limited time.

In this implementation, $t_{th}$ is a preconfigured value, and the AI model is highly implementation-related. AI models with a same purpose may have very different internal model structures, and during actual calculation, different structures may have very different computing efficiency due to different hardware utilization, data scheduling latency, and the like. Software optimization and compilation are required between the AI model and hardware computing resources, and different software optimization and compilation methods also bring different computing efficiency. Different AI computing hardware has different implementation orientations, and may also bring different AI model computing efficiency. These factors may lead to a computing efficiency deviation of hundreds of times, that is, it is difficult to perform compensation by simply configuring a margin.

In the foregoing several implementations, there are some disadvantages in a process of transferring information about the AI model between the communication devices. This application provides a communication method, to transfer the AI model between the communication devices with as low transmission resource overheads as possible.

It should be understood that the communication method provided in embodiments of this application may be applied to a system in which communication is performed by using a multi-antenna technology, for example, the communication system 100 shown in FIG. 1. The communication system may include at least one network device and at least one terminal device. The network device may communicate with the terminal device by using the multi-antenna technology.

It should be further understood that a specific structure of an execution body of the method provided in embodiments of this application is not specifically limited in the following embodiments, provided that communication can be performed according to the method provided in embodiments of this application by running a program that records code of the method provided in embodiments of this application. For example, the method provided in embodiments of this application may be performed by a first device and a second device, or a functional module that is in the first device and the second device and that can invoke a program and execute the program.

The following uses interaction between the first device and the second device as an example to describe in detail the communication method provided in embodiments of this application.

FIG. 2 is a schematic flowchart of a communication method according to this application. The method includes the following steps.

S310: A first device obtains a first function of a second device.

For example, the first device may be the device #2 described above, and the second device may be the device #1 described above. Specific implementation forms of the first device and the second device are not limited in embodiments. For example, the first device may be a network device, and the second device may be a terminal device. Alternatively, for another example, the first device may be a core network device, and the second device may be a terminal device. The first device may be understood as a device configured to send an AI model, and may be referred to as a transmit end device. The second device may be understood as a device configured to receive an AI model, and may be referred to as a receive end device.

Specifically, the first function is used to evaluate a resource consumed by the second device for executing the AI model, or the first function is used to evaluate execution performance of executing the AI model in an execution environment of the second device.

For example, the function in this embodiment may also be referred to as an evaluator, an evaluation function, an evaluation table, or an evaluation model. In this application, a name of a function used to evaluate a resource consumed by a device for executing an AI model is not limited. All functions that can be used to evaluate the resource consumed by the device for executing the AI model fall within the protection scope of this application.

In a possible implementation, the resource consumed by the second device for executing the AI model may be time consumed by the second device for executing the AI model.

In another possible implementation, the resource consumed by the second device for executing the AI model may be energy consumed by the second device for executing the AI model.

That the resource consumed by the second device for executing the AI model is the time or the energy is merely an example, and does not constitute any limitation on the protection scope of this application. A specific form of the resource consumed by the second device for executing the AI model is not limited in this application. Alternatively, the resource may be a resource other than the time or the energy, for example, a consumed memory or an impact degree on execution of another application by the second device.

For example, in this embodiment, the first function includes at least one of the following:

a second AI model generated through training based on second information and third information;
a mapping function formed through fitting based on second information and third information; or
a mapping table obtained through statistics collection based on second information and third information, where
an input of the first function is related to the second information, an output of the first function is related to the third information, and the second information includes at least one of the following information: information about an AI operator, information about an AI module, or information about a third AI model; and
the third information includes at least one of the following information: a resource consumed by a third device for executing the AI operator, a resource consumed by a third device for executing the AI module, or a resource consumed by a third device for executing the third AI model, the third device is the second device or the third device has a same first capability as the second device, and the first capability is related to execution of the AI operator, the AI module, or the third AI model.

Specifically, the first capability may be understood as the execution environment of the second device, or may be understood as a software and hardware capability that is of the second device and that is used to execute the AI operator, the AI module, or the third AI model. For example, the first capability may include but is not limited to a hardware execution capability (for example, memory reading and computing power), or an optimization and compilation capability. Alternatively, the first capability may be understood as a factor that is in the second device and the third device and that may affect execution performance of the AI operator, the AI module, or the third AI model.

In addition, it should be noted that the first function obtained by the first device may be used to evaluate the execution performance of executing the AI model in the execution environment of the second device, or may be used to evaluate execution performance of executing the AI model in execution environments of a plurality of devices (where for example, the plurality of devices are devices of a same type). This is not limited in embodiments.

The third device may be the second device, or may be a device that has a same first capability (for example, a software and hardware capability, an execution environment, or an execution capability) as the second device. The first capability may be provided by simulation software. For example, the third device is a device in which simulation software is installed. When executing the AI operator, the AI module, or the third AI model, the simulation software may simulate a result that is the same as or similar to that of the second device. A specific form of the third device is not limited in embodiments.

It should be understood that the second information is related to the third information. In other words, when the second information is the information about the AI operator, the third information is the resource consumed by the third device for executing the AI operator. Similarly, when the second information is the information about the AI module, the third information is the resource consumed by the third device for executing the AI module; when the second information is the information about the third AI model, the third information is the resource consumed by the third device for executing the third AI model; when the second information is the information about the AI operator and the information about the AI module, the third information is the resource consumed by the third device for executing the AI operator and the resource consumed by the third device for executing the AI module; and so on. Details are not described herein again.

For example, in this embodiment, the information about the AI module includes at least one of the following:
type information of the AI module, a parameter of the AI module, information about front and rear modules of the AI module, or information about front and rear operators of the AI module. The information about the AI module may alternatively be understood as information about front and rear substructures of the AI module or information about front and rear layers of the AI module.

The parameter of the AI module may include a structure parameter of the AI module and/or a weight parameter of the AI module. The structure parameter of the AI module is relatively mandatory.

For example, in this embodiment, the information about the AI operator includes at least one of the following:

type information of the AI operator, a parameter of the AI operator, information about front and rear operators of the AI operator, or information about front and rear modules of the AI operator. The information about the AI operator may alternatively be understood as information about front and rear substructures of the AI operator or information about front and rear layers of the AI operator.

The parameter of the AI operator may include a structure parameter of the AI operator and/or a weight parameter of the AI operator. The structure parameter of the AI operator is relatively mandatory.

For example, in this embodiment, the information about the third AI model includes at least one of the following:

a parameter of an overall structure of the third AI model or a parameter of a substructure of the third AI model. The substructure of the third AI model may be understood as a remaining part of the overall structure of the third AI model with some AI operators or some AI modules being deleted from the overall structure of the third AI model.

In a possible implementation, the first function is the second AI model. In other words, in this implementation, the first device may evaluate, based on the second AI model, execution performance of executing an AI model in the execution environment of the second device.

For example, the second AI model may be based on a conventional machine learning algorithm or a deep learning algorithm.

For example, input information of the second AI model is information about a first AI model, and output information of the second AI model is execution performance of executing the first AI model by the second device.

In another possible implementation, the first function is the mapping function. In other words, in this implementation, the first device may evaluate, based on the mapping function, execution performance of executing an AI model in the execution environment of the second device.

For example, the mapping function may be a linear function, a polynomial function, or a non-linear function.

For example, input information of the mapping function is information about a first AI model, and output information of the mapping function is execution performance of executing the first AI model by the second device.

In still another possible implementation, the first function is the mapping table. In other words, in this implementation, the first device may evaluate, based on the mapping table, execution performance of executing an AI model in the execution environment of the second device.

For example, the mapping table includes a correspondence between information about a first AI model and execution performance of executing the first AI model by the second device.

It should be understood that the foregoing several possible implementations are merely examples of possible forms of the first function, and do not constitute any limitation on the protection scope of this application. Other information that can be used to evaluate the execution performance of executing the first AI model in the execution environment of the second device also falls within the protection scope of this application. Details are not described herein.

It should be understood that, in this embodiment, the first device may obtain a plurality of functions corresponding to a plurality of devices.

For example, the first device obtains a function #1 and a function #2. The function #1 is used to evaluate a resource consumed for executing an AI model in an execution environment of the device #1, and the function #2 is used to evaluate a resource consumed for executing an AI model in an execution environment of the device #2.

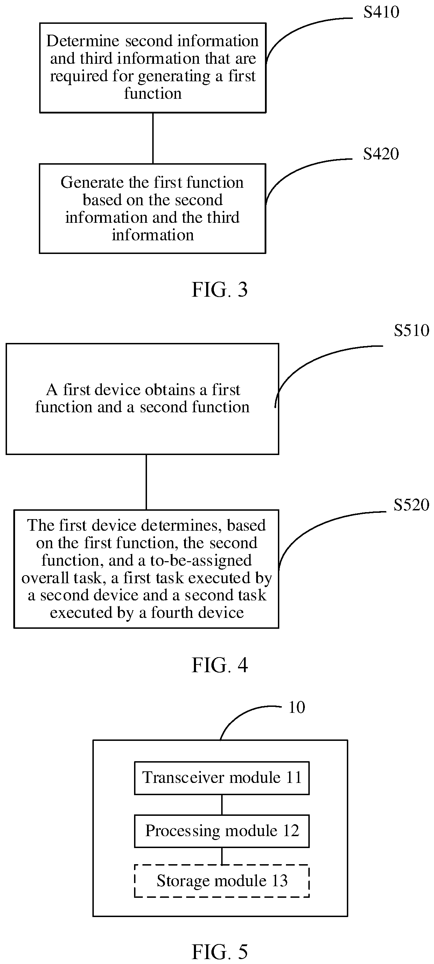

This application further provides a communication method. When the first device obtains a plurality of functions corresponding to a plurality of devices, the first device may perform task assignment based on the plurality of functions. Details are not described in this embodiment. The following describes in detail a task assignment procedure of the first device with reference to FIG. 4.

For ease of description, the following uses an example in which the first device obtains the first function corresponding to the second device for description. A process in which the first device obtains a function corresponding to another device is similar to a process in which the first device obtains the first function corresponding to the second device. Details are not described again in this application.

For example, the first device may obtain an identifier (such as an ID or a number) of the first function, and a correspondence between the identifier of the first function and the first function may be agreed in advance or agreed by using another method. After obtaining the identifier of the first function, the first device can determine the first function based on the correspondence between the identifier of the first function and the first function.

In a possible implementation, that the first device obtains the first function may be that the first device receives the first function. That the first device receives the first function may be that the first device receives the first function from the second device, or may be that the first device receives the first function from another device related to the second device. The another device related to the second device may communicate with the first device, and can obtain the first function. For example, the another device related to the second device may separately communicate with the first device and the second device. Alternatively, for another example, the another device related to the second device may communicate with the first device, but does not need to perform communication with the second device, but only stores the foregoing first function.

In another possible implementation, that the first device obtains the first function may be that the first device receives first indication information, and obtains the first function based on the first indication information, where the first indication information includes information indicating a manner of obtaining the first function and/or an identifier of the first function. That the first device receives the first indication information may be that the first device receives the first indication information from the second device, or may be that the first device receives the first indication information from another device related to the second device.

For ease of understanding, the following describes the process in which the first device obtains the first function with reference to a specific implementation.

Implementation #1: The first device receives the first function from the second device. In this implementation #1, step S310 is as follows: The first device receives the first function from the second device, or the second device sends the first function to the first device.

In this implementation #1, the second device needs to obtain the first function.

In a possible implementation, the first function is set on the second device when the second device is produced.

In another possible implementation, the first function is obtained by the second device from another device.

For example, the first function is generated and then set on another device, and the second device knows the manner of obtaining the first function. For example, the second device receives the first indication information indicating the manner of obtaining the first function, and the second device obtains the first function based on the first indication information. The first indication information may include but is not limited to the following information: the identifier of the first function, an indication of a device or a network address for placing the first function, a communication protocol for obtaining the first function, a format of the first function, a method for using the first function, or the like.

For another example, the first function is set on another device, and the second device obtains the identifier of the first function. For example, the second device receives the first indication information indicating the identifier of the first function, and the second device obtains the first function based on the first indication information. The first indication information includes but is not limited to the following information: identification information such as the ID or the number of the first function.

In still another possible implementation, the first function is generated by the second device. The following describes in detail a process of generating the first function with reference to FIG. 3. Details are not described herein.

It should be understood that the foregoing merely describes an example of the manner of obtaining the first function by the second device, and does not constitute any limitation on the protection scope of this application. Another manner in which the first function can be obtained also falls within the protection scope of this application.

In this implementation #1, after obtaining the first function, the second device may send the first function to the first device. A specific sending manner is not limited in embodiments. The first function may be carried in existing signaling, or may be sent by using newly added signaling.

Implementation #2: The first device receives the first indication information from the second device, where the first indication information includes the information indicating the manner of obtaining the first function and/or the identifier of the first function. In this implementation #2, step S310 is as follows: The first device receives the first indication information from the second device, and obtains the first function based on the first indication information.

In this implementation #2, the second device needs to obtain the first indication information. For example, the first function is generated and then set on another device, and the information indicating the manner of obtaining the first function and/or the identifier of the first function are/is sent to the second device.

In this implementation #2, after obtaining the first indication information, the second device may send the first indication information to the first device. A specific sending manner is not limited in embodiments. The first indication information may be carried in existing signaling, or may be sent by using newly added signaling.

Further, the first device may obtain the first function based on the first indication information.

For example, that the first device obtains the first function based on the first indication information may be that the first indication information is the information indicating the manner of obtaining the first function, and the first device determines the manner of obtaining the first function, and obtains the first function based on the obtaining manner. For example, the information indicating the manner of obtaining the first function may include but is not limited to information such as the identifier of the first function, an indication of a device or a network address for placing the first function, a communication protocol for obtaining the first function, a format of the first function, or a method for using the first function.

For example, when the obtaining manner of the first device indicates a device or a network address for placing the first AI model, the first device may obtain the first function from the device or the network address for placing the first AI model.

For example, that the first device obtains the first function based on the first indication information may be that the first indication information is the identifier of the first function, and the first device obtains, based on the identifier of the first function, the first function from a device storing the first function.

For example, a management device includes a plurality of functions, and identifiers of the plurality of functions are respectively #1, #2, and #3. The first device learns that the identifier of the first function is #3. In this case, the first device may report #3 to the management device, and the management device sends a function whose identifier is #3 to the first device.

Implementation #3: The first device downloads the first function from another device (for example, an internet).

In this implementation #3, a related vendor of the second device generates the first function, and sets the first function on the internet for downloading and use. A manner in which the related vendor of the second device generates the first function is described in detail below with reference to FIG. 3. Details are not described herein.

In a possible implementation, the first device downloads the first function from the internet.

For example, if the first device needs to determine a function #1 corresponding to a device #1, the first device may download the function #1 from the internet.

In another possible implementation, a related vendor of the first device downloads, from the internet, a plurality of functions corresponding to a plurality of devices, and places identifiers of the plurality of functions on the first device.

For example, the related vendor of the first device downloads, from the internet, a function #1 corresponding to a device #1, a function #2 corresponding to a device #2, and a function #3 corresponding to a device #3, where an identifier of the function #1 is "#1", an identifier of the function #2 is "#2", and an identifier of the function #3 is "#3". The related vendor of the first device places "#1", "#2", and "#3" on the first device. If the first device needs to determine a function whose identifier is "#1", the first device downloads the function #1 from the internet.

In still another possible implementation, a related vendor of the first device downloads, from the internet, a plurality of functions corresponding to a plurality of devices, places identifiers of the plurality of functions on another device, and notifies the first device of a manner of obtaining the functions.

Implementation #4: The first device indirectly obtains the first function.

In this implementation #4, a related vendor of the second device generates the first function, and sets the first function on an internet for downloading and use, or sends the first function to a related vendor of the first device for use. A manner in which the related vendor of the second device generates the first function is described in detail below with reference to FIG. 3. Details are not described herein. The related vendor or a related device of the first device downloads the first function from the internet or receives the first function, and has a capability of using the first function. This is equivalent to a case in which the first device indirectly obtains the first function.

It should be understood that the foregoing implementation #1 to implementation #4 briefly describe a manner in which the first device directly or indirectly obtains the first function of the second device in this embodiment, and do not constitute any limitation on the protection scope of this application. Another manner in which the first function of the second device can be obtained also falls within the protection scope of this application. For example, in a predefined manner, the first device locally configures functions corresponding to different devices. Examples are not provided one by one for description herein.

Further, after obtaining the first function of the second device, the first device may evaluate, based on the first function of the second device, the resource consumed by the second device for executing the AI model. A method procedure shown in FIG. 2 further includes the following step:

S320: The first device determines, based on the first function and the information about the first AI model, a first resource consumed by the second device for executing the first AI model.

The first AI model is any AI model to be executed by the second device, and the first resource consumed for executing the first AI model in the execution environment of the second device may be understood as time information, energy information, or other information for executing the first AI model in the execution environment of the second device. Time for executing the first AI model in the execution environment of the second device is duration consumed for executing the first AI model in the execution environment of the second device. Energy for executing the first AI model in the execution environment of the second device is energy consumed for executing the first AI model in the execution environment of the second device.

The information about the first AI model includes at least one of the following: information about an AI operator included in the first AI model, information about an AI module included in the first AI model, a parameter of an overall structure of the first AI model, or a parameter of a substructure of the first AI model.

Specifically, the first device separately determines, with reference to the obtained first function and at least one to-be-delivered AI model on the first device, a resource consumed for executing the at least one to-be-delivered AI model on the second device.

In a possible implementation, that the first device determines, based on the first function and the information about the first AI model, the first resource consumed by the second device for executing the first AI model may be that the first device evaluates, based on the first function and the information about the first AI model, the first resource consumed by the second device for executing the first AI model. In other words, in this implementation, the first device performs an evaluation procedure.

In another possible implementation, that the first device determines, based on the first function and the information about the first AI model, the first resource consumed by the second device for executing the first AI model may be as follows: The first device sends the first function or the identifier of the first function to another device. It is assumed that the another device knows the information about the first AI model (where for example, the another device is the related device of the first device), and the another device performs an evaluation procedure, and then sends an evaluation result to the first device.

Optionally, in this implementation, if the another device does not know the first AI model that needs to be evaluated, the first device may send the first AI model that needs to be evaluated or an identifier of the first AI model to the another device.

In still another possible implementation, that the first device determines, based on the first function, the first resource consumed by the second device for executing the first AI model may be as follows: The first device sends the first AI model that needs to be evaluated or an identifier of the first AI model to another device. It is assumed that the another device knows the first function, and the another device performs an evaluation procedure, and then sends an evaluation result to the first device.

Optionally, in this implementation, if the another device does not know the first function, the first device may send the first function and/or the first indication information to the another device, and the another device obtains the first function based on the first indication information.

It should be understood that the foregoing evaluation procedure performed by the another device may be completed before the first device needs to determine the first resource consumed by the second device for executing the first AI model. This is equivalent to a case in which the first device queries the another device for an evaluation result by using the first function and/or the identifier of the first AI model, and receives the evaluation result from the another device.

For example, after downloading the first function from the internet or receiving the first function, the related vendor or the related device of the first device obtains an evaluation result of the first AI model based on the first function and the information about the first AI model, and places the evaluation result on another device. When the first device needs to determine the first resource consumed by the second device for executing the first AI model, the first device sends the first function and/or the identifier of the first AI model to the another device, and the another device sends, based on the first function and/or the identifier of the first AI model, an evaluation result corresponding to the first function to the first device.

For example, the evaluation result queried by the first device from the another device by using the identifier of the first function includes at least one of the following possibilities: the first resource consumed by the first AI model, whether the first resource consumed by the first AI model meets a first condition, or whether the first information should be sent to the second device. The following describes in detail the evaluation result. Details are not described herein.

For example, in a process of evaluating the first resource that needs to be consumed by the second device for executing the first AI model, in addition to the first function of the second device, the first device may further consider another parameter, including but not limited to the following:
The first device receives at least one of the following information from the second device: processing resource indication information or second indication information.

Therefore, that the first device determines, based on the first function, the first resource consumed by the second device for executing the first AI model includes: The first device determines, based on the first function and at least one of the following information: the resource indication information or the second indication information, the first resource consumed by the second device for executing the first AI model.

The processing resource indication information indicates a proportion of processing resources that can be used by the second device to execute the first AI model, and the second indication information indicates to adjust a value of a proportion of the first resource consumed by the second device for executing the first AI model.

For example, the processing resource is related to a first capability of the second device, and the first capability is related to execution of the AI operator, the AI module, or the third AI model. That the processing resource is related to the first capability of the second device includes but is not limited to the following: The processing resource is an expression form of the first capability.

For example, the resource indication information is sent by the second device to the first device, and indicates a proportion of resources that can be currently used by the second device to execute the first AI model. If only 50% of computing resources (a proportion of available resources) can be used for AI model execution, execution time may need to be doubled.

For another example, the resource indication information is sent by the second device to the first device, and indicates a proportion of resources occupied by a task currently executed by the second device. For example, if the proportion of resources occupied by the task currently executed by the second device is 30%, the first device determines that the proportion of resources that can be currently used by the second device to execute the first AI model is 70%.

In an example, the processing resource indication information may further indicate a processing resource that can be used by the second device to execute the first AI model. This is equivalent to indicating a quantity of processing resources that can be used to execute the first AI model.

In an example, the second indication information may indicate to adjust the value of the proportion of the first resource consumed for executing the first AI model, to adjust the value of the proportion of the first resource consumed by the second device for executing the first AI model. For example, the second indication information indicates that the evaluation result is doubled, indicating that the value of the proportion of the first resource that is consumed by the second device for executing the first AI model and that is obtained through evaluation needs to be doubled.

In an example, when the first device receives the processing resource indication information and the second indication information, the first device may adjust, based on the processing resource that can be used by the second device to execute the first AI model, the value of the proportion of the first resource consumed by the second device for executing the first AI model.

For example, if only 50% of resources (a proportion of available resources) can be used for AI model execution, execution time (information about impact of the proportion of available resources on execution performance) may need to be doubled.

Specifically, in this embodiment, the first device determines, based on the evaluation result or an adjusted evaluation result, whether to send the first information to the second device. The method procedure shown in FIG. 2 further includes the following step:

S330: The first device determines, based on the first resource, whether to send the first information to the second device.

Specifically, the first information includes at least one of the following: the first AI model or the manner of obtaining the first AI model.

That the first information includes the first AI model may be understood as that the first information includes the information about the first AI model, for example, includes but is not limited to structure information of the first AI model and weight information of the first AI model.

That the first information includes the manner of obtaining the first AI model may be understood as that the first information includes the information indicating the obtaining manner, for example, may include but is not limited to information such as the identifier of the first AI model, an indication of the device or the network address for placing the first AI model, a communication protocol for obtaining the first AI model, a format of the first AI model, and a method for using the first AI model.

In a possible implementation, when the first resource meets the first condition, the first device sends the first information to the second device, where the first condition is related to a preset threshold. The preset threshold may alternatively be obtained by the first device from the second device or another device related to the second device.

The first resource includes at least one of the following: time or energy. When the first resource includes the time and the energy, the preset threshold includes a first preset threshold and a second preset threshold, the first preset threshold is related to the time, and the second preset threshold is related to the energy.

For example, when the first resource is the time, the first condition may be that time consumed by the second device for executing the first AI model is less than or equal to a first threshold. In addition, when the first resource is the energy, the first condition may be that energy consumed by the second device for executing the first AI model is less than or equal to a second threshold.

For example, if the evaluation result is that the first resource meets the first condition (or the first AI model matches the second device), the first device determines to send the first information to the second device.

For another example, as shown in step S320, the first device may further obtain an evaluation result from another device. When the first device obtains the evaluation result from the another device, the evaluation result may be the first resource consumed by the second device for executing the first AI model, or may be whether the first resource consumed by the second device for executing the first AI model meets the first condition or whether the first information should be sent to the second device.

If the first device determines, based on the evaluation result, that the AI model needs to be sent, the first device may send the AI model. For example, an AI model structure description and an AI model weight are included, or only an AI model weight is included while an AI model structure is determined in another manner. Alternatively, the first device may send obtaining method information of the AI model. The obtaining method information may include but is not limited to an identifier of the AI model, an indication of a device or a network address for placing the AI model, a communication protocol for obtaining the AI model, a format of the AI model, a method for using the AI model, or the like.

Optionally, in this implementation, the first device may send, to the second device, time for enabling the first AI model.

Optionally, in this implementation, the second device obtains the first AI model, and deploys and applies the first AI model. If the second device receives obtaining method information of the first AI model, the second device obtains the first AI model based on the information, and deploys and applies the first AI model. In addition, if the second device receives the time for enabling the first AI model (where for example, the first information includes the time for enabling the first AI model), the second device enables the first AI model at the time.

Optionally, in this implementation, the second device may feed back a result of executing the first AI model.

In another possible implementation, when the first resource does not meet the first condition, the first device does not send the first information to the second device, or the first device sends, to the second device, information indicating not to enable an AI mode or notifying that there is no matching AI model, or the first device does not send information to the second device.

For example, if the evaluation result is an indication that the first resource does not meet the first condition (or that no AI model matches the second device), the first device sends, to the second device, information indicating not to enable an AI mode or notifying that there is no matching AI model.

In still another possible implementation, when the first resource does not meet the first condition, the first device may adjust an execution configuration of the first AI model, so that a first resource consumed for executing a first AI model obtained through configuration adjustment can meet the first condition. Then, the first device sends the first information and an execution configuration adjustment indication to the second device.

For example, the adjusting the execution configuration of the first AI model includes but is not limited to: reducing a quantity of samples during execution of the first AI model, so that a first resource consumed for executing a first AI model obtained by reducing the quantity of samples can meet the first condition. It may be understood that the configuration adjustment of the first AI model may alternatively be completed by another device, and an indication of the configuration adjustment is sent to the first device. Details are not described herein.

In detailed descriptions of the embodiment shown in FIG. 2, the first device may evaluate, based on the first function, the resource consumed by the second device for executing the AI model, and determine, based on the resource consumed by the second device for executing the first AI model, whether to send the first AI model to the second device. It may be understood that the first device does not send all AI models, but before sending an AI model, evaluates a resource consumed by the second device for executing the AI model. If the resource consumed by the second device for executing the first AI model does not meet a specific requirement, the first AI model may not be sent to the second device, so that an appropriate AI model is sent to the second device, avoiding a waste of resources caused by sending an inappropriate AI model.

In addition, generation of the first function is briefly described in the embodiment shown in FIG. 2. For ease of understanding, the following describes in detail the process of generating the first function with reference to FIG. 3.

FIG. 3 is a diagram of a process of generating a first function according to an embodiment of this application, including the following step:

S410: Determine second information and third information that are required for generating the first function.

The second information may be understood as input-related information of the first function, and the third information may be understood as output-related information of the first function. Specifically, in this embodiment, the second information and the third information that are required for generating the first function are information known to a third device (or a generation device).

In a possible implementation, the second information is information about a plurality of known AI operators, and the third information is information about a plurality of consumed resources #1 obtained by executing the plurality of known AI operators based on an execution environment of the third device.

In another possible implementation, the second information is information about a plurality of known AI modules, and the third information is a plurality of consumed resources #2 obtained by executing the plurality of known AI modules based on an execution environment of the third device.

In still another possible implementation, the second information is information about a plurality of known AI models, and the third information is a plurality of consumed resources #3 obtained by executing the plurality of known AI models based on an execution environment of the third device.

In still another possible implementation, the second information includes information about a plurality of known AI operators and information about a plurality of known AI modules, and the third information includes a plurality of consumed resources #1 obtained by executing the plurality of known AI operators based on an execution environment of the third device, and a plurality of consumed resources #2 obtained by executing the plurality of known AI modules based on the execution environment of the third device.

In still another possible implementation, the second information includes information about a plurality of known AI operators and information about a plurality of known AI models, and the third information includes a plurality of consumed resources #1 obtained by executing the plurality of known AI operators based on an execution environment of the third device, and a plurality of consumed resources #3 obtained by executing the plurality of known AI models based on the execution environment of the third device.

In other words, the second information required for generating the first function may be any combination of the information about the plurality of known AI operators, the information about the plurality of known AI modules, and the information about the plurality of known AI models, and the third information is a consumed resource corresponding to corresponding second information.

It should be understood that the execution environment of the third device is the same as or similar to an execution environment of a second device. In other words, the first function generated in the third device may be used to evaluate a resource consumed by the second device for executing the AI model.

For example, the third information required for generating the first function may further include confidence of an output result.

Specifically, the second information and the third information that are required for generating the first function constitute a dataset, and then the first function is generated by using the dataset. A generation process herein may be: generating an AI model through training, forming a mapping function through fitting, or obtaining a mapping table through statistics collection. A method procedure shown in FIG. 3 further includes the following step:

S420: Generate the first function based on the second information and the third information.

In this embodiment, the process of generating the first function may be implemented in two manners: In an implementation, the second information is an AI module or an AI operator.

When the second information is the AI module or the AI operator, when expected execution performance of a complete AI model is evaluated, the AI model needs to be decomposed into a series of AI modules and/or AI operators, and the series of AI modules and/or AI operators are separately executed, to obtain execution performance of all the AI modules and/or all the AI operators. Overall execution performance of the AI model is obtained based on the execution performance of all the AI modules and/or all the AI operators.

For example, the execution performance of all the AI modules and/or all the AI operators may be summarized to obtain the overall execution performance of the AI model.

For example, the second information includes but is not limited to the following information:

a type of the AI module or the AI operator, a batch size (Batch size), a parameter of the AI module or the AI operator, information about front and rear layers, and other information.

The type of the AI module or the AI operator includes a convolution operator, a fully connected operator, an LSTM module, a Transformer module, a ResBlock module, and the like. For example, data of this type is usually encoded in a one-hot (one-hot) encoding manner. A specific definition and encoding of the AI module or the AI operator may be determined through negotiation.

The batch size is a quantity of samples that are input into AI models (AI models to be sent for application) in batch. During execution of the AI model (training or inference), the batch size affects a calculation amount of the AI module or the AI operator, further affecting execution performance.

The parameter of the AI module or the AI operator includes a parameter and/or a configuration parameter that describes a specific internal structure of the AI module or the AI operator. For example, a parameter of the fully connected operator may include but is not limited to an input data dimension and an output data dimension. A parameter of the convolution operator may include but is not limited to a convolution kernel size, an input channel quantity, an output channel quantity, a stride (stride) length, whether to perform padding (padding), whether to add an offset, whether to perform dilation (dilation), and the like. A long short-term memory (Long Short-Term Memory, LSTM) neural network may include but is not limited to unidirectional LSTM, bidirectional LSTM, or the like. These parameters affect the calculation amount of the AI module or the AI operator, further affecting the execution performance.

The information about the front and rear layers is information about at least one layer of AI modules or AI operators before and after a current AI module or AI operator in the entire AI model, and may include a type and a parameter. Some information about the front and rear AI modules or AI operators may be the same as that about the current AI module or operator. For example, an output data dimension of a front layer may be the same as an input data dimension of a current layer. In this case, the repeated information does not need to be input repeatedly.

The other information is other information that may affect execution performance of the current input AI module or AI operator, or configuration information of the AI module or the AI operator, may include but is not limited to: an execution type (training or inference), parallel information (whether another AI model or AI operator is executed in parallel with the current AI model or AI operator, and information about parallel execution), numerical precision information, quantization information, pruning information (for example, whether to perform pruning and a pruning proportion), operator or module fusion information, and the like.

In this implementation, the third information is execution performance of executing the AI module or the AI operator in the execution environment of the third device. Execution may be training or inference, and the execution performance may be execution time and/or energy consumption, that is, execution duration and/or energy consumption.

It can be learned from the foregoing that, in this implementation, a method for generating a dataset (including all datasets that may be used in a model generation process, such as a training dataset, a validation dataset, and a test dataset) is: collecting all currently disclosed possible AI modules or AI operators, or all available AI modules or AI operators agreed in advance, using information about a configured AI module or AI operator as the second information for each AI module or AI operator, and executing the AI module or the AI operator in the execution environment or a simulated execution environment of the third device, to obtain execution performance as the third information. In this case, each set of second information and third information constitutes a sample of the dataset. For a same AI module or AI operator, a configuration is transformed (where content of the second information is changed), to obtain other execution performance, that is, another sample of the dataset may be constituted.

In this implementation, in the process of generating the first function, a type code may be assigned to each AI module or AI operator, to generate a first function applicable to all AI modules or AI operators. Alternatively, a function may be generated for each AI module or AI operator. The function may omit an input of a type code, but may need a function number corresponding to a specific AI module or AI operator. In this case, functions of all AI modules or AI operators constitute a first function. When the first function is executed, a corresponding function needs to be found and executed for a specific AI module or AI operator. Alternatively, the two manners may be mixed.

In another implementation, the second information is a parameter of an overall structure of the AI model or a parameter of a substructure of the AI model, and the overall structure of the AI model or the substructure of the AI model includes a plurality of AI modules and/or AI operators.

For example, the second information is the parameter of the overall structure of the AI model. A parameter of a structure of a complete AI model is used as the second information, and the complete AI model may be executed in the execution environment of the third device to obtain overall execution performance of the AI model as the third information. Alternatively, a structure of a complete AI model may be decomposed into a plurality of operators, modules, and substructures, and then the operators, the modules, and the substructures are separately executed in the execution environment of the third device. Execution performance of the operators, the modules, and the substructures are obtained and summarized to obtain overall execution performance of the AI model as the third information.

In this implementation, when the first function is an AI model, for example, the first function may be an AI model of an RNN type, a long short-term memory (Long short-term memory, LSTM) type, a gate recurrent unit (Gate Recurrent Unit, GRU) type, or a Transformer type. A complete AI model is expanded into a series of AI modules or AI operators, and is input into the first function as a sequence. This is similar to a processing manner of a sentence or a sequence in natural language processing.

Optionally, preprocessing may be performed on the second information, and post-processing may be further performed on the third information. The preprocessing may include but is not limited to splitting, fusion, normalization, translation, whitening, and the like. The post-processing may include but is not limited to summarization/superposition, quantization, encoding, and the like.

When the first function is an AI model, a possible form includes but is not limited to: being based on a conventional machine learning algorithm, a deep learning algorithm, or the like. When the first function is a mapping function, a possible form includes but is not limited to: a linear function, a polynomial function, a non-linear function, or the like. When the first function is a mapping table, a possible form includes but is not limited to: listing all datasets into a table.

FIG. 4 is a schematic flowchart of another communication method according to this application, including the following step:

S510: A first device obtains a first function and a second function.

The first function is used to evaluate a resource consumed by a second device for executing an AI model, and the second function is used to evaluate a resource consumed by a fourth device for executing the AI model.

Specifically, for a process in which the first device obtains the first function, refer to the descriptions in step S310 in the embodiment shown in FIG. 2. Details are not described herein again. In addition, a process in which the first device obtains the second function is similar to the process in which the first device obtains the first function. Details are not described herein again.

For a process of generating the first function and the second function, refer to the descriptions in FIG. 3. Details are not described herein again.

In this embodiment, after obtaining the first function and the second function, the first device may assign a task based on the first function, the second function, and a to-be-assigned overall task. A method procedure shown in FIG. 4 further includes the following step:

S520: The first device determines, based on the first function, the second function, and the to-be-assigned overall task, a first task executed by the second device and a second task executed by the fourth device.

Specifically, the to-be-assigned overall task includes the first task and the second task.

In a possible implementation, in this embodiment, after obtaining the first function and the second function, the first device may determine, based on the first function, the second function, and the to-be-assigned overall task, the first task executed by the second device and the second task executed by the fourth device. That is, a task assignment procedure is performed by the first device.

In another possible implementation, that the first device determines, based on the first function, the second function, and the to-be-assigned overall task, the first task executed by the second device and the second task executed by the fourth device may be that the first device sends the first function and the second function, or an identifier of the first function and an identifier of the second function to another device, and the another device performs an assignment procedure, and then sends an assignment result to the first device.

Optionally, in this implementation, if the another device does not know the to-be-assigned overall task, the first device may send the to-be-assigned overall task or an identifier of the overall task to the another device.

In this embodiment, after obtaining functions corresponding to a plurality of devices, the first device may evaluate, with reference to the obtained functions and the to-be-assigned overall task, execution performance of executing the to-be-assigned overall task in the plurality of devices, and determine task assignment (or task load sharing) based on the execution performance and a task requirement. Execution may include AI model inference or training.

For example, the first task and the second task meet a first rule, and the first rule includes at least one of the following:

Execution of the first task and execution of the second task are completed simultaneously;

execution of the first task and execution of the second task are completed based on a predefined time sequence;

a preset time difference exists between a moment at which execution of the first task is completed and a moment at which execution of the second task is completed;

energy required for completing execution of the first task is equal to energy required for completing execution of the second task;

a proportion of energy required for completing execution of the first task to energy required for completing execution of the second task meets a preset proportion requirement; or

a preset energy difference exists between energy required for completing execution of the first task and energy required for completing execution of the second task.

For example, the first task and the second task include but are not limited to any one of the following: AI model training of different quantities of samples, AI model inference of different quantities of samples, AI model training in different phases, or AI model inference in different phases.

Further, the first device sends the first task and the second task to the second device and the fourth device based on the assignment result, the second device receives and executes the first task, and the fourth device receives and executes the second task.

Optionally, the second device and the fourth device feed back execution results based on an indication.

It should be understood that in the embodiment shown in FIG. 4, an example in which the first device obtains two functions corresponding to two devices is used for description. This does not constitute any limitation on the protection scope of this application. The first device may alternatively obtain functions corresponding to more than two devices, and perform task assignment based on the obtained functions. A specific assignment target and assignment process are shown in the procedure shown in FIG. 4. Details are not described herein again.

It should be understood that sequence numbers of the foregoing processes do not mean execution sequences. The execution sequences of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, the first device or the second device) in a conventional network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the devices (for example, the first device and the second device) may alternatively be implemented by a component (for example, a chip or a circuit) of the device.

The communication methods provided in embodiments of this application are described above in detail with reference to FIG. 2 to FIG. 4. The communication methods are mainly described from a perspective of interaction between the first device and the second device. It may be understood that to implement the foregoing functions, the first device and the second device include corresponding hardware structures and/or software modules for performing the functions.

A person skilled in the art should be able to be aware that, in combination with the examples described in embodiments disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail a first device and a second device provided in embodiments of this application with reference to FIG. 5 to FIG. 7. It should be understood that descriptions of apparatus embodiments correspond to the descriptions of the method embodiments. Therefore, for content that is not described in detail, refer to the foregoing method embodiments. For brevity, some content is not described again.

In embodiments of this application, the first device and the second device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely a logical function division. During actual implementation, another division manner may be used. Descriptions are provided below by using an example in which each functional module is obtained through division based on each corresponding function.

FIG. 5 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform operations related to receiving and sending. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device in the foregoing method embodiments.

In a first design, the apparatus 10 may correspond to the first device in the foregoing method embodiments, or may be a component (for example, a chip) of the first device.

The apparatus 10 may implement a corresponding step or procedure performed by the first device in the foregoing method embodiments. The transceiver module 11 may be configured to perform receiving and sending related operations of the first device in the foregoing method embodiments. The processing module 12 may be configured to perform a processing related operation of the first device in the foregoing method embodiments.

In a possible implementation, the transceiver module 11 is configured to obtain a first function, where the first function is used to evaluate a resource consumed by a second device for executing an artificial intelligence AI model. The processing module 12 is configured to determine, based on the first function, a first resource consumed by the second device for executing a first AI model. The transceiver module 11 is configured to determine, based on the first resource, whether to send first information to the second device, where the first information includes at least one of the following: the first AI model or a manner of obtaining the first AI model.

It should be understood that a specific process in which the units perform the foregoing corresponding steps is described in detail in the foregoing method embodiments. For brevity, details are not described herein again.

In a second design, the apparatus 10 may correspond to the second device in the foregoing method embodiments, or may be a component (for example, a chip) of the second device.

The apparatus 10 may implement a corresponding step or procedure performed by the second device in the foregoing method embodiments. The transceiver module 11 may be configured to perform receiving and sending related operations of the second device in the foregoing method embodiments. The processing module 12 may be configured to perform a processing related operation of the second device in the foregoing method embodiments.

In a possible implementation, the transceiver module 11 is configured to obtain a first function and/or first indication information, where the first indication information indicates a manner of obtaining the first function, or the first indication information is an identifier of the first function, and the first function is used to evaluate a resource consumed by the second device for executing an artificial intelligence AI model. The transceiver module 11 is configured to send the first function and/or the first indication information to a first device.

It should be understood that a specific process in which the units perform the foregoing corresponding steps is described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by the devices (for example, the first device and the second device) in the foregoing methods. The function may be implemented by hardware, or may be implemented by hardware by executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 11 may be a transceiver circuit (for example, may include a receiver circuit and a transmitter circuit), and the processing module may be a processing circuit.

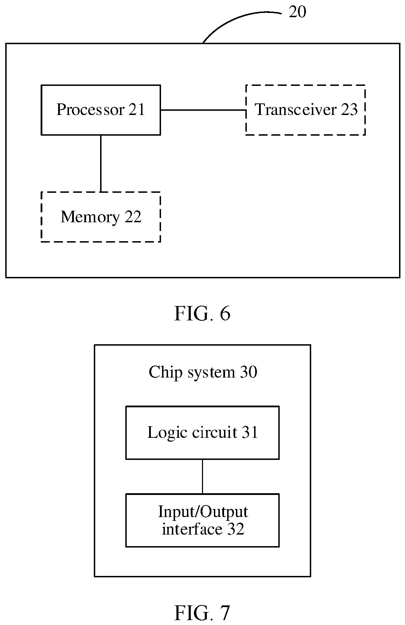

FIG. 6 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 6, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 6, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the first device or the second device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

FIG. 7 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first device and the second device in the foregoing method embodiments.

For example, the logic circuit 31 is configured to implement processing-related operations performed by the first device and the second device in the foregoing method embodiments. The input/output interface 32 is configured to implement sending-and/or receiving-related operations performed by the first device and the second device in the foregoing method embodiments.

An embodiment of this application further provides a computer-readable storage medium. The computer-readable storage medium stores computer instructions used to implement the method performed by the first device and the second device in the foregoing method embodiments.

An embodiment of this application further provides a computer program product, including instructions. When the instructions are executed by a computer, the method performed by the first device and the second device in the foregoing method embodiments is implemented.

An embodiment of this application further provides a communication system, including the foregoing first device and the foregoing second device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   obtaining, by a first device, a first function, wherein the first function is used to evaluate a resource consumed by a second device for executing an artificial intelligence AI model;
   determining, by the first device based on the first function and information about a first AI model, a first resource consumed by the second device for executing the first AI model; and
   determining, by the first device based on the first resource, whether to send first information to the second device, wherein the first information comprises at least one of the following: the first AI model or a manner of obtaining the first AI model.

2. The method according to claim 1, wherein the first function comprises at least one of the following:

   a second AI model generated through training based on second information and third information;

a mapping function formed through fitting based on second information and third information; or a mapping table obtained through statistics collection based on second information and third information, wherein

an input of the first function is related to the second information, an output of the first function is related to the third information, and the second information comprises at least one of the following information: information about an AI operator, information about an AI module, or information about a third AI model; and the third information comprises at least one of the following information: a resource consumed by a third device for executing the AI operator, a resource consumed by a third device for executing the AI module, or a resource consumed by a third device for executing the third AI model, the third device is the second device or the third device has a same first capability as the second device, and the first capability is related to execution of the AI operator, the AI module, or the third AI model.

3. The method according to claim 2, wherein

the information about the AI module comprises at least one of the following: type information of the AI module, a parameter of the AI module, information about front and rear modules of the AI module, or information about front and rear operators of the AI module;

the information about the AI operator comprises at least one of the following: type information of the AI operator, a parameter of the AI operator, information about front and rear operators of the AI operator, or information about front and rear modules of the AI operator; and

the information about the third AI model comprises at least one of the following: a parameter of an overall structure of the third AI model or a parameter of a substructure of the third AI model.

4. The method according to any one of claims 1 to 3, wherein the information about the first AI model comprises at least one of the following: information about an AI operator comprised in the first AI model, information about an AI module comprised in the first AI model, a parameter of an overall structure of the first AI model, or a parameter of a substructure of the first AI model.

5. The method according to any one of claims 1 to 4, wherein the obtaining, by a first device, a first function comprises:

receiving, by the first device, the first function; or receiving, by the first device, first indication information, and obtaining the first function based on the first indication information, wherein the first indication information comprises information indicating a manner of obtaining the first function, and/or an identifier of the first function.

6. The method according to any one of claims 1 to 5, wherein when the first resource meets a first condition, the first device sends the first information to the second device, wherein the first condition is related to a preset threshold.

7. The method according to claim 6, wherein the first resource comprises at least one of the following: time or energy.

8. The method according to claim 7, wherein when the first resource comprises the time and the energy, the preset threshold comprises a first preset threshold and a second preset threshold, the first preset threshold is related to the time, and the second preset threshold is related to the energy.

9. The method according to any one of claims 1 to 8, wherein before the determining, by the first device based on the first resource, whether to send first information to the second device, the method further comprises:

receiving, by the first device, at least one of the following information from the second device: processing resource indication information or second indication information, wherein the processing resource indication information indicates a proportion of processing resources that can be used by the second device to execute the first AI model, and the second indication information indicates to adjust a value of a proportion of the first resource consumed by the second device for executing the first AI model.

10. The method according to claim 9, wherein the determining, by the first device based on the first function and information about a first AI model, a first resource consumed by the second device for executing the first AI model comprises:
determining, by the first device based on the first function, the information about the first AI model, and at least one of the following information: the resource indication information or the second indication information, the first resource consumed by the second device for executing the first AI model.

11. The method according to any one of claims 1 to 10, wherein the method further comprises:

obtaining, by the first device, a second function, wherein the second function is used to evaluate a resource consumed by a fourth device for executing an AI model;

determining, by the first device based on the second function and information about a fourth AI model, a second resource consumed by the fourth device for executing the fourth AI model; and

when the first device determines, based on the first resource, to send the first information to the second device, and determines, based on the second resource, to send fourth information to the fourth device, determining, by the first device based on the second function and the first function, a first task executed by the second device and a second task executed by the fourth device, wherein the first task and the second task meet a first rule.

12. The method according to claim 11, wherein the first rule comprises at least one of the following:

execution of the first task and execution of the second task are completed simultaneously;

execution of the first task and execution of the second task are completed based on a predefined time sequence;

a preset time difference exists between a moment at which execution of the first task is completed and a moment at which execution of the second task is completed;

energy required for completing execution of the first task is equal to energy required for completing execution of the second task;

a proportion of energy required for completing execution of the first task to energy required for completing execution of the second task meets a preset proportion requirement; or

a preset energy difference exists between energy required for completing execution of the first task and energy required for completing execution of the second task.

13. A communication method, comprising:

obtaining, by a second device, a first function and/or first indication information, wherein the first indication information comprises information indicating a manner of obtaining the first function, and/or an identifier of the first function, and the first function is used to evaluate a resource consumed by the second device for executing an artificial intelligence AI model; and

sending, by the second device, the first function and/or the first indication information to a first device.

14. The method according to claim 13, wherein the first function comprises at least one of the following:

a second AI model generated through training based on second information and third information;

a mapping function formed through fitting based on second information and third information; or

a mapping table obtained through statistics collection based on second information and third information, wherein

an input of the first function is related to the second information, an output of the first function is related to the third information, and the second information comprises at least one of the following information: information about an AI operator, information about an AI module, or information about a third AI model; and

the third information comprises at least one of the following information: a resource consumed by a third device for executing the AI operator, a resource consumed by a third device for executing the AI module, or a resource consumed by a third device for executing the third AI model, the third device is the second device or the third device has a same first capability as the second device, and the first capability is related to execution of the AI operator, the AI module, or the third AI model.

15. The method according to claim 13 or 14, wherein the method further comprises:
receiving, by the second device, first information from the first device, wherein the first information comprises at least one of the following: a first AI model or a manner of obtaining the first AI model.

16. The method according to any one of claims 13 to 15, wherein the method further comprises:

sending, by the second device, processing resource indication information or second indication information to the first device, wherein the processing resource indication information indicates a proportion of processing resources that can be used by the second device to execute the first AI model, and the second indication information indicates to adjust a value of a proportion of a first resource consumed by the second device for executing the first AI model.

17. A first device, wherein the first device comprises a processor and a memory, the processor is coupled to the memory, the memory is configured to store a computer program, and when the processor runs the computer program, the first device is enabled to perform the method according to any one of claims 1 to 12.

18. A second device, wherein the second device comprises a processor and a memory, the processor is coupled to the memory, the memory is configured to store a computer program, and when the processor runs the computer program, the second device is enabled to perform the method according to any one of claims 13 to 16.

19. A computer-readable storage medium, wherein the computer-readable storage medium stores computer instructions, and when the computer instructions are run on a first terminal, the first terminal is enabled to perform the method according to any one of claims 1 to 16.

20. A computer program product, comprising instructions, wherein when the instructions are run on a first terminal, the first terminal is enabled to perform the method according to any one of claims 1 to 16.

21. A chip, wherein the chip is installed on a first terminal, the chip comprises a processor and a communication interface, and when the processor reads instructions through the communication interface and runs the instructions, the first terminal is enabled to perform the method according to any one of claims 1 to 16.

FIG. 1

S310

A first device obtains a first function of a second device

S320

The first device determines, based on the first function and information about a first AI model, a first resource consumed by the second device for executing the first AI model

S330

The first device determines, based on the first resource, whether to send first information to the second device

FIG. 2

S410

Determine second information
and third information that are
required for generating a first
function

S420

Generate the first function
based on the second
information and the third
information

FIG. 3

S510

A first device obtains a first
function and a second function

S520

The first device determines, based
on the first function, the second
function, and a to-be-assigned
overall task, a first task executed by
a second device and a second task
executed by a fourth device

FIG. 4

10

Transceiver module 11

Processing module 12

Storage module 13

FIG. 5

FIG. 6

FIG. 7

| | **INTERNATIONAL SEARCH REPORT** | International application No. |
|---|---|---|
| | | **PCT/CN2023/106241** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; DWPI; ENTXTC; ENTXT; CNKI; 3GPP: 评估, 函数, 人工智能, AI模型, 时间, 能量, 能耗, 消耗, 标识, 阈值, 指示, evaluation, function, artificial intelligence, AI, time, energy, consumption, identification, thresholds, indication

**C. DOCUMENTS CONSIDERED TO BE RELEVANT**

| Category* | Citation of document, with indication, where appropriate, of the relevant passages | Relevant to claim No. |
|---|---|---|
| Y | WO 2021142609 A1 (GUANGDONG OPPO MOBILE TELECOMMUNICATIONS CORP., LTD.) 22 July 2021 (2021-07-22) description, p. 4, line 40 to p. 6, line 22 | 1-8, 13-15, 17-21 |
| Y | WO 2020042112 A1 (HUAWEI TECHNOLOGIES CO., LTD.) 05 March 2020 (2020-03-05) description, p. 6, line 15 to p. 7, line 22 | 1-8, 13-15, 17-21 |
| A | WO 2021128110 A1 (HUAWEI TECHNOLOGIES CO., LTD.) 01 July 2021 (2021-07-01) entire document | 1-21 |
| A | CN 111949972 A (HUAKONG TSINGJIAO INFORMATION SCIENCE (BEIJING) LIMITED) 17 November 2020 (2020-11-17) entire document | 1-21 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 September 2023** | **20 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/106241**

| Patent document cited in search report | | | Publication date (day/month/year) | Patent family member(s) | | | Publication date (day/month/year) |
|---|---|---|---|---|---|---|---|
| WO | 2021142609 | A1 | 22 July 2021 | CN | 114930945 | A | 19 August 2022 |
| | | | | US | 2022342713 | A1 | 27 October 2022 |
| | | | | EP | 4087343 | A1 | 09 November 2022 |
| WO | 2020042112 | A1 | 05 March 2020 | CN | 112204532 | A | 08 January 2021 |
| WO | 2021128110 | A1 | 01 July 2021 | CN | 114788384 | A | 22 July 2022 |
| | | | | US | 2022322111 | A1 | 06 October 2022 |
| | | | | EP | 4072226 | A1 | 12 October 2022 |
| | | | | WO | 2021128746 | A1 | 01 July 2021 |
| CN | 111949972 | A | 17 November 2020 | | None | | |

Form PCT/ISA/210 (patent family annex) (July 2022)

**REFERENCES CITED IN THE DESCRIPTION**

**Patent documents cited in the description**

- CN 202210864312
- CN 202211044983X